# EUROPÄISCHE PATENTSCHRIFT

(11) **EP 4 169 666 B1**
(45) Veröffentlichungstag und Bekanntmachung des Hinweises auf die Patenterteilung: **02.12.2026**
(21) Anmeldenummer: 22203128.8
(22) Anmeldetag: 21.10.2022
(51) Int. Cl.: B24B 53/00, B24D 3/06, B24B 53/06, B24B 49/12, B23H 9/00

(54) **VERWENDUNG EINES SCHLEIFWERKZEUGS, SCHLEIFWERKZEUG SOWIE VERFAHREN ZUR HERSTELLUNG EINES SOLCHEN**
USE OF A GRINDING TOOL, GRINDING TOOL AND METHOD FOR PRODUCING SAME
UTILISATION D'UN OUTIL DE MEULAGE, OUTIL DE MEULAGE ET PROCÉDÉ DE FABRICATION D'UN TEL OUTIL DE MEULAGE

(30) Priorität: 21.10.2021 DE 102021127394
(43) Veröffentlichungstag der Anmeldung: 26.04.2023
(73) Patentinhaber: Jakob Lach GmbH & Co. KG, 63452 Hanau (DE)
(72) Erfinder: LACH, Horst, 63450 Hanau (DE)
(74) Vertreter: Stoffregen, Hans-Herbert

(56) Entgegenhaltungen:
- CN-U- 206 200 777
- DE-A1- 102019 202 533
- JP-A- 2015 098 041
- JP-A- 2020 040 138
- HEITZ E: "DIAMANTEN IN DER METALLBEARBEITUNG", TECHNICA, BIRKHAEUSER VERLAG, BASEL, CH, 1 January 1980 (1980-01-01), pages 1491 - 1496, XP001013933, ISSN: 0040-0866

## Beschreibung

Die Erfindung betrifft ein Schleifwerkzeug mit einen Grundkörper, an dem durch eine metallische Bindungsmatrix ultraharte Körner zumindest einer Körnung mit einer Korngröße X zur Bildung einer Schleif- oder Entgratfläche gebunden sind und die Schleiffläche nach Entfernen eines gegebenenfalls vorhandenen Abbrands vor erstmaligem Gebrauch mittels eines Abtragverfahrens bearbeitet ist.

Auch ist Gegenstand der Erfindung ein Verfahren zur Herstellung eines Schleifwerkzeugs mit einem Grundkörper, wobei an den Grundkörper eine metallische Bindungsmatrix aufgebracht wird, wobei in der Bindungsmatrix ultraharte Körner zumindest einer Körnung mit einer Korngröße X zur Bildung einer Schleif- oder Entgratfläche gebunden sind und wobei die Schleif- oder Entgratfläche nach Entfernen eines gegebenenfalls vorhandenen Abbrands vor erstmaligem Gebrauch des Schleifwerkzeugs mittels eines Abtragverfahrens bearbeitet wird.

Ferner betrifft die Erfindung eine Verwendung eines Schleifwerkzeugs, wobei das Schleifwerkzeug einen Grundkörper umfasst, an dem durch eine metallische Bindungsmatrix ultraharte Körner zumindest einer Körnung mit einer Korngröße X zur Bildung einer Schleif- oder Entgratfläche gebunden sind.

Die DE 10 2019 202 533 A1 betrifft ein Verfahren und eine Vorrichtung zur Aufbereitung eines Feinbearbeitungswerkzeugs sowie ein Feinbearbeitungswerkzeug. Dabei weist das Feinbearbeitungswerkzeug wenigstens einen Schneidmittelträger auf, der mindestens einen Schneidbelag trägt, welcher innerhalb einer Bindung gebundene Schneidkörner und eine abrasive Arbeitsfläche zum Eingriff an der Werkstückoberfläche aufweist. Das Verfahren umfasst die Schritte Erzeugung der Makroform der abrasiven Arbeitsfläche des Schneidbelags, Zurücksetzen der Bindung gegenüber den Schneidkörnern zur Erzeugung eines Kornüberstands an der Arbeitsfläche des Schneidbelags, wobei das Zurücksetzen der Bindung gegenüber den Schneidkörnern mittels selektiver Laserablation durchgeführt wird, indem die Arbeitsfläche mit gepulster Laserstrahlung bestrahlt wird, die geeignet ist, Material der Bindung zwischen Schneidkörnern abzutragen, ohne gleichzeitig die Schneidkörner in gleichem Maße abzutragen.

Die JP 2020 040 138 A betrifft ein Werkzeug mit Schleifkörnern sowie ein Verfahren zur Herstellung des Werkzeugs. Dabei ist vorgesehen, dass die Schleifkörner mittels eines Laserverfahrens mit einem Überstand in einer Oberfläche des Schleifwerkzeugs eingeschmolzen werden.

Der Artikel E. Heitz: "Diamanten in der Metallbearbeitung", Technica, 18/1980, beschreibt auf Seite 1492 rechte Spalte, dass bei Werkzeugen mit einschichtigem, galvanisch gebundenem Diamant-Belag ein SNDBM-Diamanten-Belag (SNDMB = Selected Natural Diamond Metal Bond) aufgrund seiner spezifischen Eigenschaften anderen Diamanten-Typen überlegen sei. Beim Einsatzverhalten resultiere der wesentliche Unterschied zwischen Werkzeugen mit galvanischer Bindung und imprägnierter Metallbindung daraus, dass erstere nur einen einschichtigen, zu 60-80 % des Korndurchmessers in einer Nickelschicht eingebetteten Diamantbetrag tragen.

Die CN 206 200 777 betrifft eine Diamant-Schleifscheibe, wobei auf einer Oberfläche Diamanten aufgebracht sind. In der Beschreibungseinleitung werden verschiedene Verfahren zum Aufbringen der Diamanten beschrieben, unter anderem Lötverfahren, Laserverfahren sowie additive Herstellungsverfahren.

Ein Verfahren zum Profilieren und Schärfen einer metallisch gebundenen Schleifscheibe ist aus der EP 1 208 943 A1 bekannt. Bei dem Verfahren zum Schärfen und Profilieren einer metallisch gebundenen Schleifscheibe, welche zur Bearbeitung von Werkstücken dient, ist eine Elektrode angebracht, die von der Schleifscheibe einen einstellbaren Abstand aufweist. In dem so gebildeten Spalt wird eine Prozessflüssigkeit eingebracht. Zwischen der Schleifscheibe, welche als Anode dient, und der Elektrode, welche als Katode dient, wird durch einen Generator eine Spannung erzeugt, die die Form von Impulsen aufweist. Die Elektrode wird derart an die Schleifscheibe angenähert, dass mindestens während einem ersten Zeitintervall des Spannungsimpulses mindestens ein Bereich der Schleifscheibe elektrochemisch behandelt wird und während eines zweiten Zeitintervalls des Spannungsimpulses mindestens ein Bereich der Schleifscheibe funkenerosiv behandelt wird. Diese Behandlung wird solange durchgeführt, bis die Schleifscheibe die gewünschte Profilierung und Schärfe hat. Durch die Behandlung der Schleifscheibe wird die metallische Bindung zurückgebildet, der Kornüberstand wird massiv größer, das Bindungsmaterial und die Schleifkörner, die zu stark über die Bezugslinie vorstehen, werden durch die Behandlung abgetragen.

Die JP 2015-098041 A betrifft eine Laserschmelzvorrichtung zum Abrichten und Aufbereiten einer Schleifscheibe. Ein erster Laserstrahl dient zum Abrichten, während ein zweiter Laserstrahl zum Aufbereiten vorgesehen ist. Dabei wird eine zwischen Diamantkörnern bestehende Matrixverbindung durch den Laser abgetragen. Gleichzeitig wird auch eine Schicht des Diamantkorns durch den Laser abgetragen.

Die DE 40 33 137 C1 betrifft ein Verfahren und eine Vorrichtung zum elektroerosiven Abrichten von Schleifscheiben mit elektrisch leitender Bindung. Dabei werden das Abrichtwerkzeug und die Schleifscheibe mechanisch in Kontakt gebracht und zwischen denselben eine Spannung angelegt. Das Abrichtwerkzeug ist eine in sich zweigeteilte Elektrode, deren Elektroden eine unterschiedliche Polarität aufweisen und durch eine Isolierung voneinander getrennt sind, wobei ein Spannungskreis über die beiden Elektroden geführt ist. Bei einer abgenutzten Schleifscheibe ragen deren Diamantkörner nicht über die Bindung hinaus, so dass die Oberfläche des Abrichtwerkzeugs über die zugesetzten Bereiche der Schleifscheibe gleitet. Der über Oberflächen-Punktkontakte vom Abrichtwerkzeug zur Schleifscheibe bzw. umgekehrt fließende Strom zerstört die Ablagerungen, so dass die Diamantkörner etwas freigelegt werden.

Ein Schleifwerkzeug der eingangs genannten Art umfasst einen Grundkörper, an dem durch eine metallische Bindungsmatrix ultraharte Körner, wie Körner aus Diamant oder kubischem Bornitrid (CBN), gebunden sind. Das Schleifwerkzeug weist eine Schleiffläche auf, die für das Schleifen von Hartmetall, gehärteten Stählen und beispielsweise Keramik ausgebildet ist. Für die bekannten Schleifscheiben werden üblicherweise ultraharte Körner mit einer Korngröße im Bereich von 3 µm bis 300 µm verwendet, die in einer Konzentration im Bereich von 1,1 crt/cm³ bis 8,8 crt/cm³ in der metallischen Bindungsmatrix verteilt sind.

Bei den bekannten Dimant- und CBN-Schleifscheiben zum Schleifen von Hartmetall, gehärteten Stählen und Keramik sind die ultraharten Körner nahezu vollständig in dem Schleifbelag eingeschlossen, so dass die ultraharten Körner bei der Bearbeitung lange in der metallischen Bindungsmatrix gehalten werden. Dadurch wird eine hohe Verschleißfestigkeit erreicht, die insbesondere für lange Standzeiten erwünscht ist. Diese bekannten metallgebundenen Schleifscheiben sind für die Bearbeitung von Graphit, Graphit aufweisenden Materialien oder zumindest einem Material aus der Gruppe gehärtete Stähle mit einer Härte im Bereich von 30 - 66 HRC (Härte nach Rockwell), Kunststoffe oder abrasive Composite-Materialien in der Regel nicht geeignet sind, da eine Neigung zum Verschmieren zu beobachten ist.

Aus einem Prospekt "Diamant- und CBN-Schleifscheiben - Standard für Metallbearbeitung", 02/2018, der Jakob Lach GmbH & Co. KG sind Schleifscheiben bekannt, die einen Grundkörper aufweisen, an dem durch eine metallische Bindungsmatrix ultraharte Körner, wie Körner aus Diamant oder kubischen Bornitrid (CBN), gebunden sind.

Die ultraharten Körner aus Diamant oder CBN sind synthetisch hergestellte Hartstoffschleifmittel mit geometrisch unbestimmten Schneiden für Schleifaufgaben. Für Schrupp-, Schlicht-, - und Feinschleifen werden unterschiedliche Korngrößen verwendet, wodurch die Oberflächengüte der geschliffenen Werkstücke, die Schleiffreudigkeit und Standzeit der Schleifscheibe beeinflusst wird. Die Korngröße wird so gewählt, wie dies unter Berücksichtigung der verlangten Oberflächenqualität erforderlich ist.

Die ultraharten Körner werden als Diamantpulver mit eng tolerierter Korngröße bereitgestellt. Die verschiedenen Korngrößen werden gemäß FEPA-Norm (Federation of European Producers of Abrasives) mit Nummern wie z. B. D107/B107 bezeichnet, wobei D für Diamant und B für CBN steht. Die Bezeichnung D107/B107 bedeutet, dass das größte Korn in Mikrometer (1/1000mm) +1 die Kornbezeichnung angibt. Innerhalb einer Körnung sind die ultraharten Körner gemäß einer Korngrößenverteilung (Gaußverteilung) verteilt. Die Körnung mit der Kornbezeichnung D107/B107 besagt, dass 98% der Körner eine Korngröße im Bereich 90 bis 106 µm aufweisen.

Abtragleistung und Wirtschaftlichkeit eines Schleifwerkzeugs werden neben der Korngröße und der Art der Bindung auch durch die Konzentration der ultraharten Körner in der Bindungsmatrix bestimmt. Die Konzentration gibt den Anteil von Diamanten bzw. CBN in der Bindung an und ist durch die Größe "Karat(=crt) je cm³ Belagvolumen" definiert.

Eine niedrige Konzentration mit der Bezeichnung C38 bzw. V90 (= 1,67 crt/cm³) wird vorzugsweise für breitrandige Topfscheiben für unkontrollierbare Schleifarbeiten, wie z. B. Handschleifböcke, sehr feine Korngrößen oder sehr weiche Bindungen eingesetzt.

Eine mittlere Konzentration mit der Bezeichnung C50 bis C75 bzw. V120 bis V180 (= 2,2 crt/cm³ bis 3,3 crt/cm³ wird für Flach- und Rundschleifen, mittlere Belagbreiten, feine Körnungen und weiche Bindungen eingesetzt.

Höhere Konzentrationen mit der Bezeichnung C100 bis C150 bzw. V240 bis V360 (= 4,4 crt/cm³ bis 6,6 crt/cm³) werden für Schleifscheiben für Naß-Schliff, insbesondere Tiefschliff, geringe Belagbreite, härtere Bindung, maximale Profilhaltigkeit und grobe Körnung eingesetzt.

Neben der Wahl der Korngröße und Konzentration kommt der Wahl der richtigen Bindung für eine Schleifaufgabe eine große Bedeutung zu. Die ultraharten Körner sollen, solange sie noch Schneiden besitzen, in der Bindung gehalten werden. Sind die Körner stumpf, müssen Sie als unbrauchbar aus der Bindung ausbrechen. Entscheidend für die Wirtschaftlichkeit des Schleifwerkzeugs bei der Wahl von Körnung, Konzentration und Bindung sind die richtigen Einsatzbedingungen. Für einzelne Anwendungen stehen verschiedene Bindungen zur Verfügung.

Metallische Bindungen werden besonders im Nass-Schliff eingesetzt in allen Anwendungsfällen für besonders hohe Verschleißfestigkeit, insbesondere für Profilscheiben, bei denen die Profilhaltigkeit wichtiger ist als die Griffigkeit.

Bei den zuvor beschriebenen Schleifbelägen wird die Diamant- bzw. CBN-haltige Schleiffläche nach Erstellung der Bindungsmatrix an dem Grundkörper mittels eines Abtragverfahrens durch Verwendung einer konventionellen Schleifscheibe aus Korund bzw. Silizium flächig bearbeitet, wobei sowohl die Bindungsmatrix als auch die harten Körner überschliffen werden.

Keine der zuvor genannten Schleifbeläge ist zur Bearbeitung von Graphit, Graphit aufweisendem Material oder zumindest einem Material, wie gehärtete Stähle mit einer Härte im Bereich 30-66 HRC (Härte nach Rockwell), Kunststoffe und/oder abrasive Composite-Materialien, geeignet, da die Schleifbeläge aufgrund der Schleifbehandlung keine bzw. nur geringe Spanräume mit entsprechend geringer Griffigkeit aufweisen.

Ferner sind Galvanik-Bindungen bekannt, wobei die ultraharten Körner elektrolytisch galvanisch auf einem Metallgrundkörper aufgetragen sind. Galvanik-Bindungen sind in der Regel für einschichtig belegte Schleifscheiben und Schleifkörper, wobei das Korn in z.B. eine Nickelbindung eingebettet ist. Die Körner ragen ca. 30 % bis 50 % aus der Bindung hervor, wobei die Dicke der Nickelschicht/-bindung ca. das 1,5-fache der Korngröße beträgt. Galvanik-Bindungen haben eine hohe Griffigkeit mit in der Regel sehr hohen Schleifleistungen. Je nach Einsatzfall bei Verwendung unterschiedlicher Korngrößen. Allerdings ist die Gesamtstandzeit relativ kurz, da der Schleifbelag sich auch aufgrund des Ausbrechens der Schleifkörner abnutzt.

Davon ausgehend liegt der vorliegenden Erfindung die Aufgabe zugrunde, ein Schleifwerkzeug der eingangs genannten Art sowie ein Verfahren zur Herstellung eines solchen derart weiterzubilden, dass sowohl die Griffigkeit als auch die Verschleißfestigkeit verbessert werden. Insbesondere soll ein Verschmieren des Schleifbelags des Schleifwerkzeugs bei der Bearbeitung von Graphit, Graphit aufweisendem Material und/oder Material aus der Gruppe gehärtete Stähle mit einer Härte im Bereich 30-66 HRC (Härte nach Rockwell), Kunststoffe und/oder abrasive Composite-Materialen reduziert oder im Wesentlichen vermieden werden. Ferner soll eine neue Verwendung eines Schleifwerkzeugs mit in einer metallischen Bindungsmatrix gebundenen ultraharten Körnern vorgeschlagen werden.

Die Aufgabe wird durch ein erfindungsgemäßes Schleifwerkzeug, Verfahren und Verwendung eines Schleifwerkzeugs, Merkmalen der jeweiligen unabhängigen Ansprüche gelöst.

Das Abtragverfahren ist ein punktuell wirkendes Abtragverfahren in Form eines Funkenerosionsverfahrens, wobei die Bindungsmatrix zwischen den ultraharten Körnern mittels des Abtragverfahrens punktuell in einem Umfang derart abgetragen ist, dass nach dem Abtragen zumindest 30 % der aus der Bindungsmatrix vorstehenden ultraharten Körner mit einem Überstand Ü von zumindest 40 % bezogen auf die Korngröße bezogen auf senkrecht zur Schleif- oder Entgratfläche verlaufenden Richtung R freigelegt sind

Das erfindungsgemäße Schleifwerkzeug zeichnet sich gegenüber dem Stand der Technik dadurch aus, dass die ultraharten Körner durch das punktuelle Abtragen der Bindungsmatrix derart freigelegt sind, dass die ultraharten Körner im Wesentlichen erhalten bleiben und das Korn noch fest in der Bindungsmatrix gebunden ist. Ein Abtragen der ultraharten Körner erfolgt nicht. Dadurch wird sowohl eine hohe Griffigkeit als auch eine hohe Verschleißfestigkeit erreicht. Die Schneiden der freigelegten Körner können in das zu bearbeitende Material eingreifen bzw. sich einkrallen, wodurch die verbesserte Griffigkeit erreicht wird. Zwischen den ultraharten Körnern wird die Bindungsmatrix abgetragen, so dass ein Freiraum zur Bildung eines Spanraums entsteht. Durch die verbesserte Griffigkeit, die Freiräume zwischen den ultraharten Körnern und trotzdem hohe Verschleißfestigkeit kann das erfindungsgemäße Schleifwerkzeug für die Bearbeitung von Graphit, Graphit enthaltendem Material oder Material, wie gehärtete Stähle mit einer Härte im Bereich von 30-66 HRC (HRC= Härte nach Rockwell), Kunststoffe und/oder abrasive Composite-Materialen oder diese Materialien enthaltende Materialien überraschend gut verwendet werden.

Um die Griffigkeit der Schleiffläche zu erreichen, werden ultraharte Körner mit einer Körnung verwendet, die eine Korngröße von zumindest 15µm, vorzugsweise zumindest 50µm aufweisen. Vorzugsweise können ultraharte Körner verwendet werden, die eine Korngröße im Bereich 15µm bis 1300 µm aufweisen.

Bevorzugt sind die ultraharten Körner mit einer Konzentration C im Bereich von 1,1 crt/cm³ ≤ C ≤ 8,8crt/cm³ in der metallischen Bindungsmatrix enthalten.

Es ist vorgesehen, dass während des Abtrags der Bindungsmatrix der Überstand Ü der ultraharten Körner aus der Bindungsmatrix mittels eines optischen Messverfahrens gemessen wird. Vorzugsweise liegt der Überstand Ü nach dem Abtragen der Bindungsmatrix im Bereich von 40% bis 85%, insbesondere 50% bis 70% der Korngröße der verwendeten Körnung.

Die ultraharten Körner bestehen aus Diamant oder kubischem Bornitrid.

Das Schleifwerkzeug ist vorzugsweise als Profilscheibe insbesondere Umfang- oder Topfschleifscheibe mit geradem und/oder geometrisch bestimmtem Profil ausgebildet.

Ferner betriff die Erfindung eine erfinderische Verwendung des erfindungsgemäßen Schleifwerkzeugs zur Bearbeitung von Graphit, Graphit aufweisendem Material oder zumindest einem Material aus der Gruppe gehärteter Stähle mit einer Härte im Bereich von 30 bis 66 HRC (HRC= Härte nach Rockwell), Kunststoffe und/oder abrasive Composite-Materialien.

Die Bearbeitung wird vorzugsweise aus der Gruppe Tiefschleifen, Profilschleifen oder Entgraten ausgewählt.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Zeichnungen zu entnehmenden bevorzugten Ausführungsbeispielen.

Es zeigen:
- Fig. 1a: eine Vorderansicht einer Schleifscheibe,
- Fig. 1b: eine Schnittansicht der Schleifscheibe gemäß Fig. 1a entlang der Schnittlinie A-A,
- Fig. 1c: eine Draufsicht der Schleifscheibe gemäß Fig. 1a,
- Fig. 2: eine vergrößerte Darstellung eines Details A einer Schleiffläche der Schleifscheibe gemäß Fig. 1a und
- Fig. 3: eine vergrößerte Darstellung eines Details B einer Draufsicht auf die Schleiffläche der Schleifscheibe gemäß Fig. 1c.

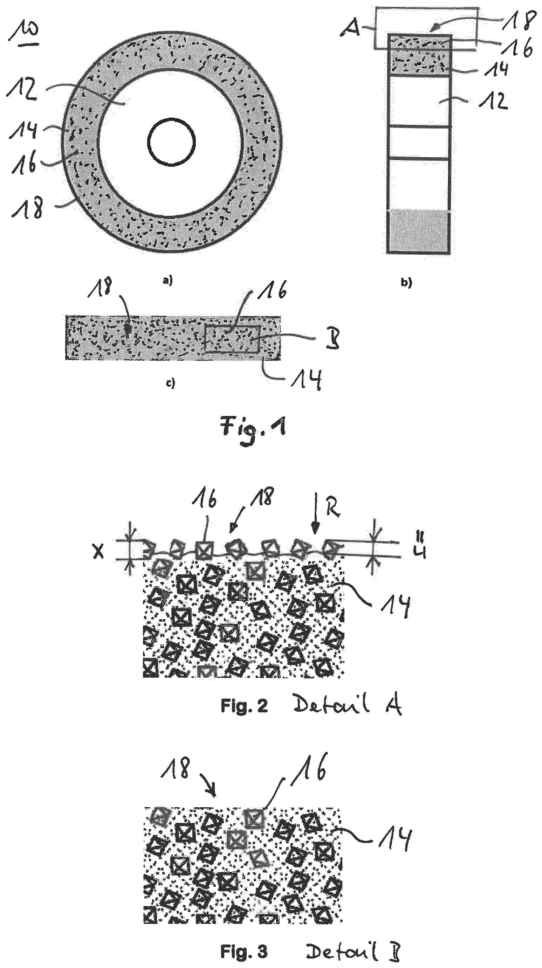

Die Fig. 1a-1c zeigen in Vorderansicht, Schnittansicht sowie Draufsicht ein Schleifwerkzeug 10 rein beispielhaft in Form einer Schleifscheibe, umfassend einen Grundkörper 12, an dem durch eine metallische Bindungsmatrix 14 ultraharte Körner 16 zur Bildung einer Schleif- oder Entgratfläche 18, nachfolgend Schleiffläche 18 genannt, gebunden sind.

Die ultraharten Körner 16 liegen in Form von Diamanten oder kubischen Bornitrid (CBN) vor. Gemäß der Erfindung wird eine Körnung verwendet, die eine Korngröße von zumindest 15 µm aufweist. In der Matrix sind Körner vorzugsweise einer einzigen Körnung gebunden. Für verschiedene Anwendungen können Körnungen verwendet werden, deren Körner Korngrößen im Bereich von 15 µm bis 1300 µm aufweisen.

Gegebenenfalls können auch mehrere Körnungen in der Matrix gebunden sein. Bekannte Körnungen nach FEPA-Norm (FEPA = Federation of European Producers Abrasives) sind zum Beispiel 53 - 63 µm (D64/BN64), 63 - 75 µm (D76/BN76), 75 - 90 µm (D791/BN91), 90 - 106 µm (D107/BN107), 106 - 125 µm (D126/BN126), 125 - 150 µm (D150/BN150), 150 - 180 µm (D181BN181) und größer, insbesondere bis 1300 µm. Die Körner sind in der metallischen Bindungsmatrix, vorzugsweise in einer Konzentration im Bereich von 1,1 crt/cm³ bis 8,8 crt/cm³, verteilt gebunden.

Die Bindungsmatrix 14 mit den darin enthaltenen ultraharten Körnern 16 wird bei hoher Temperatur durch Pressen an den metallischen Grundkörper 12 aufgebracht. Durch die Temperaturbehandlung entsteht auf der Oberfläche der Bindungsmatrix 14 ggf. ein Abbrand, der mittels einer konventionellen Korund- (Al2O3) oder Siliciumcarbid- (SiC) Schleifscheibe entfernt wird.

Fig. 2 zeigt eine vergrößerte Darstellung eines Details A der erfindungsgemäßen Schleiffläche 18. Gemäß der Erfindung ist vorgesehen, dass die Bindungsmatrix 14 ggf. nach Entfernen des Abbrands, jedoch vor erstmaligem Gebrauch des Schleifwerkzeugs 10 mittels eines vorzugsweise berührungslosen punktuell wirkenden Abtragverfahrens in Form eines Funkenerosionsverfahrens, im Wesentlichen punktuell an der Schleif- bzw. Arbeitsfläche 18 der Schleifscheibe derart abgetragen ist, dass nach dem Abtragen zumindest 30 % der aus der Arbeitsfläche bzw. Schleiffläche 18 vorstehenden ultraharten Körner 16 mit einem Überstand Ü von zumindest 40 % bezogen auf die Korngröße der verwendeten Körner 16 bezogen auf senkrecht zur Schleiffläche 18 verlaufende Richtung R freigelegt sind. Vor erstmaligem Gebrauch bedeutet, dass die Schleifscheibe 10 noch nicht bestimmungsgemäß zum Bearbeiten von Werkstücken eingesetzt wurde.

Zur Herstellung des erfindungsgemäßen Schleifwerkzeugs 10 wird dieses nach Anbringen der die ultraharten Körner 16 aufweisenden metallischen Bindungsmatrix 14 an den Grundkörper 12 und ggf. nach Entfernen des Abbrands in einer Funkenerosionsmaschine bearbeitet. Mittels Funkenerosion werden sodann Partikel der Bindungsmatrix 14 zwischen den ultraharten Körnern im Wesentlichen punktuell abgetragen, so dass die ultraharten Körner 16 freigelegt werden. Während des Abtragens der Bindungsmatrix 14 wird vorzugsweise fortlaufend ein Überstand Ü der ultraharten Körner 16 aus der Bindungsmatrix 14 mittels eines optischen Messverfahrens, insbesondere mittels eines optischen Messprojektors, gemessen. Das Freilegen der Körner wird beendet, wenn zumindest 30 % der aus der Bindungsmatrix vorstehenden ultraharten Körner 16 einen Überstand Ü von zumindest 40 % bezogen auf die Korngröße bezogen auf senkrecht zur Fläche verlaufende Richtung R aufweisen.

Fig. 3 zeigt eine vergrößerte Darstellung eines Details B der Draufsicht der Schleiffläche 18. Das Abtragen der Bindungsmatrix bzw. Freilegen der Körner ist dann beendet, wenn zumindest 30 % der aus der Bindungsmatrix vorstehenden ultraharten Körner 16 im geforderten Umfang freigelegt sind. Der Fig. 3 ist auch zu entnehmen, dass zwischen den ultraharten Körnern 16 ein Freiraum ausgebildet ist, der einen erfindungsgemäßem Spanraum bildet, so dass ein Verschmieren bei der Bearbeitung von Graphit, Graphit enthaltendem Material oder Material wie gehärteten Stählen mit einer Härte von 30-66 HRC (HRC= Härte nach Rockwell), Kunststoffe und/oder abrasiven Composite-Materialien vermieden wird.

Gegenüber dem Stand der Technik zeichnet sich das erfindungsgemäße Schleifwerkzeug 10 dadurch aus, dass die Schleiffläche 18 aufgrund der im erfindungsgemäßen Umfang freigelegten ultraharten Körner 16 eine sehr hohe Griffigkeit aufweist, wobei durch die zwischen den ultraharten Körner 16 abgetragene Bindungsmatrix ein Freiraum bzw. Spanraum gebildet ist, wodurch insbesondere beim Schleifen von Graphit, Graphit enthaltenden Materialien oder Materialien, wie gehärteten Stählen mit einer Härte von 30-66 HRC (HRC= Härte nach Rockwell), Kunststoffen und/oder abrasiven Composite-Materialien ein Verschmieren verhindert wird.

## Patentansprüche

1. Schleifwerkzeug (10), umfassend einen Grundkörper (12), an dem durch eine metallische Bindungsmatrix (14) ultraharte Körner (16) aus Diamant oder kubischem Bornitrid zumindest einer Körnung mit einer Korngröße X zur Bildung einer Schleiffläche (18) gebunden sind, wobei die Schleif- oder Entgratfläche (18) nach Entfernen eines gegebenenfalls vorhandenen Abbrands mittels eines punktuell wirkenden Abtragverfahrens bearbeitet ist,
**dadurch gekennzeichnet,**
**dass** das punktuell wirkende Abtragverfahren ein Funkenerosionsverfahren ist, dass die Bindungsmatrix (14) mittels des Funkenerosionsverfahrens punktuell in einem Umfang abgetragen ist, dass nach dem Abtragen und vor erstmaligem Gebrauch des Schleifwerkzeugs zumindest 30 % der aus der Bindungsmatrix (14) vorstehenden ultraharten Körner (16) mit einem Überstand Ü von zumindest 40 % bezogen auf die Korngröße X und bezogen auf senkrecht zur Schleif- oder Entgratfläche (18) verlaufenden Richtung R freigelegt sind, und dass zwischen den ultraharten Körnern ein Freiraum als Spanraum zur Bearbeitung von Graphit, Graphit aufweisendem Material oder zumindest einem Material aus der Gruppe gehärteter Stähle mit einer Härte im Bereich von 30 bis 66 HRC (HRC= Härte nach Rockwell), Kunststoffe und/oder abrasive Composite-Materialien ausgebildet ist.

2. Schleifwerkzeug nach Anspruch 1,
**dadurch gekennzeichnet,**
**dass** die Korngröße X der zumindest einen verwendeten Körnung zumindest 15µm beträgt, insbesondere die Korngröße X im Bereich 15µm bis 1300µm liegt.

3. Schleifwerkzeug nach Anspruch 1,
**dadurch gekennzeichnet,**
**dass** in der Bindungsmatrix (14) ultraharte Körner (16) einer einzigen Körnung gebunden sind.

4. Schleifwerkzeug nach Anspruch 1,
**dadurch gekennzeichnet,**
**dass** die ultraharten Körner (16) mit einer Konzentration C im Bereich von 1,1 crt/cm³ ≤ C ≤ 8,8crt/cm³ in der metallischen Bindungsmatrix (14) enthalten.

5. Schleifwerkzeug nach Anspruch 1,
**dadurch gekennzeichnet,**
**dass** das Schleifwerkzeug (10) eine Profilschleifscheibe ist.

6. Verfahren zur Herstellung eines Schleifwerkzeugs (10) mit einem Grundkörper (12), wobei an den Grundkörper (12) eine metallische Bindungsmatrix (14) aufgebracht wird, wobei in der Bindungsmatrix (14) ultraharte Körner (16) aus Diamant oder kubischem Bornitrid zumindest einer Körnung mit einer Korngröße X zur Bildung einer Schleif- oder Entgratfläche (18) gebunden sind und wobei die Schleif- oder Entgratfläche (18) nach Entfernen eines gegebenenfalls vorhandenen Abbrands mittels eines punktuell wirkenden Abtragverfahrens bearbeitet wird,
**dadurch gekennzeichnet,**
**dass** als Abtragverfahren ein Funkenerosionsverfahrens verwendet wird, dass die Bindungsmatrix (14) mittels des Abtragverfahrens punktuell in einem Umfang derart abgetragen wird, dass nach dem Abtragen und vor erstmaligem Gebrauch des Schleifwerkzeugs (10) zumindest 30 % der zumindest abschnittsweise aus der Bindungsmatrix (14) vorstehenden ultraharten Körner (16) mit einem Überstand Ü von zumindest 40 % bezogen auf die Korngröße X bezogen auf senkrecht zur Schleif- oder Entgratfläche (18) verlaufende Richtung R freigelegt sind, und dass zwischen den ultraharten Körnern ein Freiraum als Spanraum zur Bearbeitung von Graphit, Graphit aufweisendem Material oder zumindest einem Material aus der Gruppe gehärteter Stähle mit einer Härte im Bereich von 30 bis 66 HRC (HRC= Härte nach Rockwell), Kunststoffe und/oder abrasive Composite-Materialien ausgebildet wird.

7. Verfahren nach Anspruch 6,
**dadurch gekennzeichnet,**
**dass** ultraharte Körner (16) zumindest einer Körnung mit einer Korngröße X von zumindest 15µm verwendet werden, insbesondere die Korngröße X im Bereich 15µm bis 1300µm liegt.

8. Verfahren nach Anspruch 6,
**dadurch gekennzeichnet,**
**dass** ultraharte Körner (16) einer einzigen Körnung verwendet werden.

9. Verfahren nach Anspruch 7,
**dadurch gekennzeichnet,**
**dass** während des Abtrags der Bindungsmatrix (14) der Überstand Ü der ultraharten Körner (16) aus der Bindungsmatrix (14) mittels eines insbesondere optischen Messverfahrens gemessen wird, insbesondere der Überstand Ü nach dem Abtragen der Bindungsmatrix im Bereich von 40% bis 85%, insbesondere 50% bis 70% der Korngröße liegt.

10. Verwendung eines Schleifwerkzeugs (10) nach zumindest Anspruch 1 zur Bearbeitung von Graphit, Graphit aufweisendem Material oder zumindest einem Material aus der Gruppe gehärteter Stähle mit einer Härte im Bereich von 30 bis 66 HRC (HRC= Härte nach Rockwell), Kunststoffe und/oder abrasive Composite-Materialien.

11. Verwendung nach Anspruch 10,
**dadurch gekennzeichnet,**
**dass** der Überstand Ü nach dem Abtragen der Bindungsmatrix (14) im Bereich von 40% bis 85%, insbesondere 50% bis 70% der Korngröße X liegt.

12. Verwendung nach Anspruch 10,
**dadurch gekennzeichnet,**
**dass** der Kunststoff ein glasfaserverstärkter Kunststoff (GFK), ein kohlenstoffverstärkter Kunststoff (CFK) oder ein Composite-Material ist oder ein zuvor genanntes Material aufweist und/oder insbesondere dass die Bearbeitung aus der Gruppe Tiefschleifen, Profilschleifen oder Entgraten ausgewählt wird.

## Claims

1. A grinding tool (10), comprising a basic element (12) on which ultrahard grains (16) of diamond or cubic boron nitride with at least a granulation of grain size X are bonded by a metal bond matrix (14) to form a grinding surface (18), wherein the grinding or deburring surface (18) is machined, after removal of any scale present, by means of a removal method acting at specific points,
**characterized in**
**that** the removal method acting at specific points is an electrical discharge machining method; that the bond matrix (14) is removed at specific points by means of the electrical discharge machining method to an extent such that after removal and prior to initial use of the grinding tool at least 30% of the ultrahard grains (16) protruding from the bond matrix (14) are exposed with a projection Ü of at least 40% relative to the grain size X and relative to the direction R extending perpendicular to the grinding or deburring surface (18); and that a free space is formed between the ultrahard grains as a cutting space for the machining of graphite, of material containing graphite or of at least one material from the group of hardened steels with a hardness in the range from 30 to 66 HRC (HRC= Rockwell hardness), plastics and/or abrasive composite materials.

2. The grinding tool according to claim 1,
**characterized in**
**that** the grain size X of the at least one granulation used is at least 15µm, in particular the grain size X is in the range from 15µm to 1300µm.

3. The grinding tool according to claim 1,
**characterized in**
**that** ultrahard grains (16) of a single granulation are bonded in the bond matrix (14).

4. The grinding tool according to claim 1,
**characterized in**
**that** the ultrahard grains (16) are contained in the metal bond matrix (14) with a concentration C in the range from 1.1ct/cm³ ≤ C ≤ 8.8ct/cm³.

5. The grinding tool according to claim 1,
**characterized in**
**that** the grinding tool (10) is a profiled grinding wheel.

6. A method for producing a grinding tool (10) with a basic element (12), wherein a metal bond matrix (14) is applied onto the basic element (12); wherein ultrahard grains (16) of diamond or cubic boron nitride with at least a granulation of grain size X are bonded in the bond matrix (14) to form a grinding or deburring surface (18); and wherein the grinding or deburring surface (18) is machined, after removal of any scale present, by means of a removal method acting at specific points,
**characterized in**
**that** an electrical discharge machining method is used as the removal method; that the bond matrix (14) is removed at specific points by means of the removal method to an extent such that after removal and prior to initial use of the grinding tool (10) at least 30% of the ultrahard grains (16) protruding at least in some sections from the bond matrix (14) are exposed with a projection
Ü of at least 40% relative to the grain size X relative to the direction R extending perpendicular to the grinding or deburring surface (18); and that a free space is formed between the ultrahard grains as a cutting space for the machining of graphite, of material containing graphite or of at least one material from the group of hardened steels with a hardness in the range from 30 to 66 HRC (HRC= Rockwell hardness), plastics and/or abrasive composite materials.

7. The method according to claim 6,
**characterized in**
**that** ultrahard grains (16) with at least a granulation of a grain size X of at least 15µm are used, in particular the grain size X is in the range from 15µm to 1300µm.

8. The method according to claim 6,
**characterized in**
**that** ultrahard grains (16) of a single granulation are used.

9. The method according to claim 7,
**characterized in**
**that** during removal of the bond matrix (14) the projection Ü of the ultrahard grains (16) from the bond matrix (14) is measured by means of an in particular optical measuring method, in particular the projection Ü after removal of the bond matrix is in the range from 40% to 85%, in particular 50% to 70%, of the grain size.

10. A use of a grinding tool (10) according to at least claim 1 for the machining of graphite, of material containing graphite or of at least one material from the group of hardened steels with a hardness in the range from 30 to 66 HRC (HRC= Rockwell hardness), plastics and/or abrasive composite materials.

11. The use according to claim 10,
**characterized in**
**that** the projection Ü after removal of the bond matrix (14) is in the range from 40% to 85%, in particular 50% to 70%, of the grain size X.

12. The use according to claim 10,
**characterized in**
**that** the plastic is a glass fiber reinforced plastic (GFRP), a carbon fiber reinforced plastic (CFRP) or a composite material or has a previously stated material and/or that in particular machining is selected from the group of creep feed grinding, profile grinding or deburring.

## Revendications

1. Outil de meulage (10) comprenant un corps de base (12) auquel sont liés par une matrice métallique de liaison (14) des grains ultradurs (16) de diamant ou de nitrure de bore cubique présentant au moins une granulométrie avec une taille de grain X pour former une surface de meulage (18), sachant que la surface de meulage ou d'ébavurage (18) est usinée au moyen d'un procédé d'enlèvement de matière agissant ponctuellement, après qu'un éventuel calaminage a été enlevé, **caractérisé en ce**
**que** le procédé d'enlèvement de matière agissant ponctuellement est un procédé d'électroérosion, que la matrice de liaison (14) est enlevée ponctuellement dans une certaine ampleur au moyen du procédé d'électroérosion, qu'après l'enlèvement de matière et avant la première utilisation de l'outil de meulage, au moins 30 % des grains ultradurs (16) dépassant de la matrice de liaison (14) d'un dépassement Ü d'au moins 40 % par rapport à la taille de grain X et par rapport à la direction R s'étendant perpendiculairement à la surface de meulage ou d'ébavurage (18) sont mis à nu, et qu'est formé entre les grains ultradurs un espace libre sous forme d'espace d'enlèvement de copeau pour l'usinage de graphite ou d'un matériau présentant du graphite ou d'au moins un matériau appartenant au groupe des aciers trempés avec une dureté comprise entre 30 et 66 HRC (HRC = dureté selon Rockwell), des plastiques et/ou des matériaux composites abrasifs.

2. Outil de meulage selon la revendication 1,
**caractérisé en ce**
**que** la taille de grain X de ladite au moins une granulométrie utilisée s'élève à au moins 15 µm, notamment que la taille de grain X est comprise entre 15 µm et 1300 µm.

3. Outil de meulage selon la revendication 1,
**caractérisé en ce**
**que** sont liés, dans la matrice de liaison (14), des grains ultradurs (16) d'une seule granulométrie.

4. Outil de meulage selon la revendication 1,
**caractérisé en ce**
**que** les grains ultradurs (16) contenus dans la matrice de liaison métallique (14) présentent une concentration C telle que 1,1 ct/cm³ ≤ C ≤ 8,8 ct/cm³.

5. Outil de meulage selon la revendication 1,
**caractérisé en ce**
**que** l'outil de meulage (10) est une meule profilée.

6. Procédé de fabrication d'un outil de meulage (10) comprenant un corps de base (12), sachant qu'une matrice métallique de liaison (14) est appliquée au corps de base (12), sachant que sont liés, dans la matrice de liaison (14), des grains ultradurs (16) de diamant ou de nitrure de bore cubique présentant au moins une granulométrie avec une taille de grain X pour former une surface de meulage ou d'ébavurage (18), sachant que la surface de meulage ou d'ébavurage (18) est usinée au moyen d'un procédé d'enlèvement de matière agissant ponctuellement, après qu'un éventuel calaminage a été enlevé,
**caractérisé en ce**
**qu'**est utilisé comme procédé d'enlèvement de matière un procédé d'électroérosion, que la matrice de liaison (14) est enlevée ponctuellement dans une certaine ampleur au moyen du procédé d'enlèvement de matière de telle sorte qu'après l'enlèvement de matière et avant la première utilisation de l'outil de meulage (10), au moins 30 % des grains ultradurs (16) dépassant au moins partiellement de la matrice de liaison (14) d'un dépassement
Ü d'au moins 40 % par rapport à la taille de grain X et par rapport à la direction R s'étendant perpendiculairement à la surface de meulage ou d'ébavurage (18) sont mis à nu, et qu'est formé entre les grains ultradurs un espace libre sous forme d'espace d'enlèvement de copeau pour l'usinage de graphite ou d'un matériau présentant du graphite ou d'au moins un matériau appartenant au groupe des aciers trempés avec une dureté comprise entre 30 et 66 HRC (HRC = dureté selon Rockwell), des plastiques et/ou des matériaux composites abrasifs.

7. Procédé selon la revendication 6,
**caractérisé en ce**
**que** sont utilisés des grains ultradurs (16) présentent au moins une granulométrie avec une taille de grain X d'au moins 15 µm, notamment une taille de grain X comprise entre 15 µm et 1300 µm.

8. Procédé selon la revendication 6,
**caractérisé en ce**
**que** sont utilisés des grains ultradurs (16) d'une seule granulométrie.

9. Procédé selon la revendication 7,
**caractérisé en ce**
**que** pendant l'enlèvement de matière de la matrice de liaison (14), le dépassement Ü des grains ultradurs (16) hors de la matrice de liaison (14) est mesuré au moyen d'un procédé de mesure en particulier d'un procédé optique, que notamment le dépassement Ü après l'enlèvement de matière de la matrice de liaison est compris entre 40 % et 85 %, en particulier 50 % à 70 % de la taille de grain.

10. Utilisation d'un outil de meulage (10) selon au moins la revendication 1 pour l'usinage de graphite ou d'un matériau contenant du graphite ou d'au moins un matériau appartenant au groupe des aciers trempés avec une dureté comprise entre 30 et 66 HRC (HRC = dureté selon Rockwell), des plastiques et/ou des matériaux composites abrasifs.

11. Utilisation selon la revendication 10,
**caractérisé en ce**
**que** le dépassement Ü après l'enlèvement de matière de la matrice de liaison (14) est compris entre 40 % et 85 %, notamment 50 % et 70 % de la taille de grain X.

12. Utilisation selon la revendication 10,
**caractérisé en ce**
**que** le plastique est un plastique renforcé de fibres de verre (PRV), un plastique renforcé de fibres de carbone (PRFC) ou un matériau composite ou présente un matériau précité et/ou notamment que l'usinage est sélectionné parmi le groupe des usinages suivants : rectification profonde, rectification de profil ou ébavurage.
